# EUROPEAN PATENT SPECIFICATION

(11) **EP 0 333 270 B1**
(45) Date of publication and mention of the grant of the patent: **10.08.1994**
(21) Application number: 89200611.5
(22) Date of filing: 10.03.1989
(51) Int. Cl.: C11D 3/395, C11D 3/40

(54) **Photoactivator dye composition for detergent use**
Photoaktivatorfarbstoffzusammensetzung für Reinigungsmittel
Composition de colorant photoactiveur pour usage dans les détergents

(30) Priority: 14.03.1988 GB 8806016
(43) Date of publication of application: 20.09.1989
(73) Proprietor: THE PROCTER & GAMBLE COMPANY, Cincinnati, Ohio 45202 (US); DANOCHEMO A/S, DK-2750 Ballerup (DK)
(72) Inventor: Thorengaard, Bitten, DK-2920 Charlottenlund (DK); York, David William, B-1410 Waterloo (BE)
(74) Representative: Canonici, Jean-Jacques

(56) References cited:
- EP-A- 0 070 474
- EP-A- 0 228 105
- EP-A- 0 273 775
- FR-A- 2 543 156

## Description

### TECHNICAL FIELD

This invention relates to a photoactivator dye composition which is particularly suitable for detergent use, a method for preparing such a photoactivator composition and a detergent composition comprising the same.

### BACKGROUND

US patent specification no. 3,927,967 discloses the use of photoactivator dyes like phtalocyanine dyes for use in detergents. Such photoactivator dyes are capable of absorbing electromagnetic radiation in the visible light range and releasing the absorbed energy quanta in a form that provides bleaching action on fabrics. It is believed that the energy quanta form singlet oxygen which is oxidatively active. Some photoactivators, like zinc phtalocyanine sulfonate (ZPS) and aluminium phtalocyanine sulfonate (APS), have found commercial application in granular detergent compositions.

However, when used in detergent compositions the phtalocyanine dyes present certain drawbacks that have heretofore not properly been addressed. One such drawback is that the particles in which the dyes are incorporated do not dissolve sufficiently quickly when contacted with water to avoid dye staining. Such contact is particularly likely to occur in handwash situations, or when a dispenser is used that is placed in the drum of a washing machine, together with the clothes; such staining may even occur when the detergent composition containing the dye is dispensed from the machine dispenser of a typical European washing machine.

It has been attempted to spray a solution of the dye onto spraydried detergent granules, but it has been found that the granules thus treated do not dissolve quickly enough to avoid dye staining of the fabric. The current trend is towards higher density detergent granules which are even less suitable carriers for the dye.

The best route of photoactivator dye addition available to date comprises spraying a dye solution onto low density granules that are subsequently dry mixed with the base granules of the detergent composition. Although these low density granules dissolve more quickly than the base granules they do not dissolve quickly enough to prevent dye staining of fabrics under various laundering conditions.

### SUMMARY OF THE INVENTION

The present invention relates to phtalocyanine dyes for detergent use, characterized in that the dyes are encapsulated in an encapsulating material that quickly dissolves in cold water. Preferably, the encapsulating material does not dissolve in nonionic surfactant.

Preferred phtalocyanine dyes are zinc phtalocyanine sulfonate (ZPS) and aluminium phtalocyanine sulfonate (APS).

Preferred encapsulating materials include gelatin, particularly low bloom gelatines, and mixtures of gelatine and sugar.

The present invention also relates to a method for preparing encapsulated photoactivator compositions, comprising the steps of
1. dissolving the photoactivator dye in an aqueous medium
2. mixing the photoactivator dye solution in an aqueous solution of the encapsulating material
3. converting the mixture then obtained into droplets of an average size not exceeding 500 micrometers
4. reducing the moisture content of said particles to a value of between 2% and 12% by weight.

The invention further relates to granular detergent compositions containing the encapsulated phtalocyanine dyes.

### DETAILED DESCRIPTION OF THE INVENTION

The photoactivator dye composition according to the invention comprises micro capsules of a solid solution of a water soluble photoactivator dye (solute) in an encapsulating material (solvent) that is quickly soluble in cold water, said microcapsules comprising by weight of the capsules,
a) From 1% to 60% of the photoactivator dye, preferably from 1% to 40%,
b) from 38% to 97% of the encapsulating material, and
c) from 2% to 12% water, preferably from 2% to 5%.

The term "microcapsules" means capsules having an average particle size not exceeding 500 micrometers and preferably an average particle size range of from 50 micrometers to 450 micrometers.

In order to evaluate a material's capability to quickly solubilize in cold water, the following experiment can be performed :
A Sotax AT6 dissolution apparatus is used, in which the stirring speed is set at 150 rpm, using the paddle stirrer bars. 1 000 mls of pH 9,5 buffer is poured into each polycarbonate beaker, and maintained at 20°C. 0,05 g of material is added to the buffer solution. While stirring under the specified conditions, 3 ml aliquots of the solution are withdrawn at 15 seconds intervals for 2 minutes; the absorbance of each of the aliquots is measured at 669 nm. According to this experiment, suitable materials have the following dissolution profile :
≧ 80% dissolved at 30 seconds
≧ 95% dissolved at 60 seconds
100% dissolved at 120 seconds
Preferably, the encapsulating material of the photoactivator dye composition does not dissolve in nonionic surfactants.
Indeed, modern detergent compositions almost invariably contain nonionic surfactants, typically at levels of from 1% to 12%. In most cases this nonionic surfactant is sprayed onto the base granules of the detergent composition. During storage the nonionic detergent freely migrate through the bulk of the detergent composition particularly if the nonionic surfactant is liquid at the temperature of storage.

Since phtalocyanine dyes are highly soluble in nonionic surfactants these dyes migrate as well and become adsorbed to the base granules rather than to the low density granules. The appearance of the detergent composition becomes rather unattractive as a result. Moreover, the dissolution of the dye become associated with the dissolution of the base granules rather than with the much faster dissolution of the low density granules.

The insolubility of the encapsulating materials in nonionic surfactant, as required herein can be evaluated in the following experiment :
0,05 of the encapsulating material is added to 50 ml Dobanol 45 E₇ at 40°C (Dobanol 45 E₇ is an alkyl alcohol ethylene oxide condensate; it is predominantely linear C₁₄/C₁₅ primary alcohol with an average of 7 ethylene oxide groups).
The temperature is maintained at 40°C for 1 hour. The dissolution is measured by the absorbance at 669 nm and, according to this measure, there should be no sign of dissolution after 1 hour.

Examples of suitable water soluble photoactivators include easin, rose bengal, fluorescin, chlorophyll, metal-free porphyrin and polyvalent metal ion complexes of sulfonated phtalocyanine, especially when free of unsulfonated phtalocyanine.

Suitable examples of polyvalent metal ions include Zn²⁺, Al³⁺, Mn²⁺, etc. Preferred photoactivator dyes are zinc phtalocyanine sulfonate (ZPS) aluminium phtalocyanine sulfonate (APS) and mixtures thereof. These dyes are commercially available as the sodium salts.

In a preferred embodiment the microcapsules comprise from 5% to 30% by weight of the photoactivator dye.

Examples of suitable encapsulating materials include gelatine, hydrolyzed gelatine, film forming carbohydrates. Preferred encapsulating materials are hydrolyzed gelatine, and film-forming carbohydrates including dextrin and gum Arabic.

The photoactivator dye composition described above can be prepared by a method comprising:
(1) dissolving the photoactivator dye in an aqueous medium,
(2) mixing the photoactivator dye solution with an aqueous solution of the encapsulating material,
(3) converting the mixture thus obtained into droplets of an average particle size not exceeding 500 micrometer and
(4) reducing the moisture content of said particles to a value of between 2% and 12% by weight to form a solid solution of the photoactivator dye in the encapsulating material.

The encapsulating material should preferably have a molecular weight which is substantially higher than that of the photoactivator dye. Thus, if the size of the molecules of the photoactivator dye is less than about 0.6 of that of the encapsulating material, an extensive interstitial solid solution i.e. a solid solution in which the solute molecules occupy the interstitial space of the solvent lattice is obtained.

The formation of such an interstitial solid solution appears to substantially contribute to a quick release of the photoactivator dye in a finely dispersed form when the capsules are contacted with water.

The conversion of the mixture into droplets and the reduction of the moisture content of the droplets are preferably effected by a spray-drying technique.

In a preferred embodiment of the method of the invention the mixture is spray-dried at an elevated temperature of below 100°C while introducing a fine powder into a spray drying zone, as explained in US patent specification no. 2,756,177. The fine powder can be silicate or finely divided corn starch, preferably finely divided corn starch.

In another preferred embodiment the mixture is spray-dried at a temperature of above 100°C.

In a preferred embodiment, sugar (saccharose) or glucose sirup can be added to the mixture to be spray-dried in order to lower the viscosity of the mixture, the weight ratio of encapsulating material to sugar being at least 35:65, preferably 50:50.

Preferably an oil such as coconut oil is incorporated in the mixture to be spray-dried in the form of an emulsion. The presence of the oil facilitates the formation of droplets when the mixture is spray-dried, and amounts of from 3% to 20% by weight, preferably 5% to 10% by weight can be use; the most preferred amount of oil is 5% by weight.

The dry matter content of the mixture to be spray-dried may vary within wide ranges but the viscosity is preferably maintained within the range of from 0.07 to 0.2 Pa.s (70 cp to 200 cp) at 60°C.

Detergent compositions according to the invention preferably contains the photoactivator dye composition described above in an amount of from 2 ppm to 1,000 ppm of the pure photoactivator dye by weight of the detergent composition.

The detergent composition further contains typical detergent ingredients e.g. organic surfactants, detergent builders, conventional detergent adjuncts etc. Organic surfactants can be present at levels of from 1% to 60% of the total composition.

Preferred detergent compositions are those containing from 1% to 12% preferably from 3% to 10% of a nonionic surfactant.

The preferred nonionic surfactant preferably comprises a mixture of alkoxylated alcohols of the formula R(R′O)xOH, wherein R is hydrocarbyl containing from 12 to 20 carbon atoms R′O represents an alkoxy group, preferably an ethoxy group and x ranges from 4 to 12.

The invention will now be described in further details with reference to the following examples.

### EXAMPLES

### Example 1

3,240 g gelatine (Bloom strength O) and 3,240 g sugar were added to a solution of 1,300 g zinc phtalocyanine sulfonate in 5,200 g water while stirring. 650 g coconut oil were emulsified in the solution thus obtained.

The dry matter content of the mixture thus prepared was about 60%, about 16% being zinc phtalocyanine sulfonate and the viscosity was 0.096 Pa.s (96 cp) at 55°C.

The mixture was spray-dried in a spray drying tower while simultaneously introducing corn starch therein as a powdering composition.

The mixture was introduced at a rate of 2 l/min. and the temperature of the spray drying zone was about 70°C.

The final product (about 9,200 g) was sieved and the 600 to 125 µm (mesh 30 - mesh 120 (ASTM)) fraction was collected and analyzed. The collected fraction contained 14.1% zinc phtalocyanine sulfonate and the average particle diameter was about 350 micrometer.

### Example 2

2,388 g gelatine was dissolved in 2,135 g water by stirring and heating to a temperature of about 60°C. A solution of 126 g sodium hydroxide in 215 g water was added under stirring to the gelatine solution at a temperature of 60°C. After stirring for 20 min. at 60°C 135 g concentrated sulfuric acid (96%) was added and the pH-value was adjusted at about 5.5. 900 g of the solution thus obtained ("hydrolyzed gelatine") was mixed with a solution of 100 g zinc phtalocyanine sulfonate in 1,150 g water, 450 g spray-dried glucose syrup ("Monsweet ® 1924) and 50 g coconut oil while stirring at 55°C. When the coconut had been emulsified in the aqueous medium an additional amount of 700 g water was added. The dry matter content of the mixture thus obtained was about 30%, about 10% being zinc phtalocyanine sulfonate. The viscosity of the mixture was about 0.05 Pa.s (50 cp) at 60°C. The mixture was spray-dried in a conventional spray-drying tower at an inlet temperature of 240°C and an outlet temperature of 97°C.

The spray-dried product (about 900 g) was sieved and the sieve fraction having a particle size of more than 150 µm (less than 100 mesh (ASTM)) was collected.

This fraction contained 9.7% zinc phtalocyanine sulfonate and the average particle size was about 50 micrometer.

### Example 3

1060 g gum arabic and 1010 g sugar (saccharose) were added to a solution of 1375 g zinc phtalocyanine sulfonate in 1850 g water while stirring. 138 g coconut oil was emulsified in the solution thus obtained.

The dry matter content of the mixture thus prepared was about 45%, about 11.4% being zinc phtalocyanine sulfonate and the viscosity was 0.108 Pa.s (108 cP) at 57°C.

The mixture was spray-dried in a spray drying tower while simultaneously introducing corn starch therein as a powdering composition.

The mixture was introduced at a rate of 1.5 l/min. and the temperature of the spray drying zone was about 65°C.

The final product (about 3500 g) was sieved and the 600 to 88 µm (mesh 30 - mesh 170 (ASTM)) fraction was collected and analyzed.

The collected fraction contained 8.2% zinc phtalocyanine sulfonate and the average particle diameter was about 250 micrometers.

### Example 4

1060 g gelatine (Bloom strength 0) and 1010 g sugar (saccharose) were added to a solution of 1250 g aluminium phtalocyanine sulfonate in 850 g water while stirring. 138 g coconut oil was emulsified in the solution thus obtained.

The dry matter content of the mixture thus prepared was about 53%, about 6.3% being aluminium phtalocyanine sulfonate and the viscosity was 0.106 Pa.s (106 cP) at 58°C.

The mixture was spray-dried in a spray-drying tower while simultaneously introducing corn starch therein as a powdering composition.

The mixture was introduced at a rate of 1.5 l/min. and the temperature of the spray-drying zone was about 70°C.

The final product (about 2800 g) was sieved and the 600 to 88 µm (mesh 30 - mesh 170 (ASTM)) fraction was collected and analyzed. The collected fraction contains 5.2% aluminium phtalocyanine sulfonate.

### Example 5

1060 g gum arabic and 1010 g spray-dried glucose syrup ("Monsweet" ® 1924) were added to a solution of 1250 g aluminium phtalocyanine sulfonate in 2350 g water while stirring. 138 g coconut oil was emulsified in the solution thus obtained.

The dry matter content of the mixture thus prepared was about 40%, about 6.3% being aluminium phtalocyanine sulfonate and the viscosity was 0.104 Pa.s (104 cP) at 58°C.

The mixture was spray-dried in a spray-drying tower while simultaneously introducing corn starch therein as a powdering composition.

The mixture was introduced at a rate of 1.5 l/min. and the temperature of the spray-drying zone was about 70°C.

The final product (about 3100 g) was sieved and the 600 to 88 µm (mesh 30 - mesh 170 (ASTM)) fraction was collected and analyzed. The collected fraction contained 4.2% of aluminium phtalocyanine sulfonate.

### Example 6

A granular detergent composition was prepared, having the following composition.

| Ingredient | % |
|---|---|
| tallow alkyl sulfate | 2.4 |
| linear alkyl benzene sulfonate | 5.6 |
| polymer | 2.0 |
| silicate | 8.0 |
| sodium tripolyphosphate | 21.0 |
| sodium perborate | 15.0 |
| nonionic (Dobanol® 45E7) | 5.0 |
| enzyme (protease) | 0.8 |
| TAED | 2.0 |
| zinc phtalocyanine sulfonate* | 0.03 |
| minors (optical brightener, chelants, CMC, perfume, suds suppressor); inorganic salts (sodium sulfate, sodium carbonate, magnesium sulfate); and water | BALANCE |

| | |
|---|---|
| * as encapsulates in zero-bloom gelatin, ZPS content of capsules 3.4%. Particle size of the capsules 150-450 micrometers; 0.88% was added, to result in a ZPS level in the detergent composition of 0.03. | |

## Claims

1. A photoactivator dye composition comprising microcapsules of a solid dispersion of a water-soluble photoactivator dye in an encapsulating material that is quickly soluble in water, said microcapsules comprising, by weight of the capsules,
a) from 1% to 60% of the photoactivator dye,
b) from 38% to 97% of the encapsulating material and
c) from 2% to 12% water.

2. A composition according to claim 1, wherein the encapsulating material is insoluble in nonionic surfactants.

3. A composition according to claim 1 or 2 comprising microcapsules having an average particle size range of from 50 micrometers to 450 micrometers.

4. A composition according to claim 1 or 2 wherein the photoactivator dye is a polyvalent metal ion complex of sulfonated phtalocyanine.

5. A composition according to claim 4 wherein the photoactivator dye is zinc phtalocyanine sulfonate, aluminium phtalocyanine sulfonate, or a mixture thereof.

6. A composition according to claims 2-5 wherein the encapsulating material is selected from hydrolyzed gelatine, and the film-forming carbohydrates including dextrin and gum arabic.

7. A composition accoridng to claims 1-6 wherein the microcapsules comprise from 1 to 40%, by weight of the photoactivator dye.

8. A composition according to claims 1-7 which further contains saccharose, or glucose syrup, the weight ratio of encapsulating material to saccharose or glucose syrup being at least 35:65, preferably 50:50.

9. A method of preparing the photoactivator composition according to claim 1 or 2 comprising the steps of
(1) dissolving the photoactivator dye in an aqueous medium,
(2) mixing the photoactivator dye solution with an aqueous solution of the encapsulating material,
(3) converting the mixture thus obtained into droplets of an average particle size not exceeding 500 micrometers and
(4) reducing the moisture content of said particles to a value of between 2% and 12% by weight to form a solid solution of the photoactivator dye in the encapsulating material.

10. A method as in claim 9 wherein the conversion of the mixture into droplets and the reduction of the moisture content of said droplets is effected by spray-drying.

11. A method as in claim 10 wherein the spray drying is effected as a temperature of below 100°C while introducing a fine powder into the spray-drying zone.

12. A method as in claim 9 wherein the spray-drying is effected as a temperature of above 100°C.

13. A method as in claims 9-12 wherein saccharose or glucose is added to the mixture of the photoactivator dye and encapsulating material.

14. A method as in claims 9-13 wherein an oil is emulsified in the mixture of the photoactivator dye and encapsulating material.

15. A detergent composition comprising
a) a surfactant
b) a photoactivator dye composition according to any of claims 1-6, the pure photoactivator dye being present in an amount of 2 ppm to 1000 ppm of the total composition.
c) the balance comprising conventional detergent ingredients.

16. A detergent composition as in claim 15 which comprises from 1% to 12% of a nonionic surfactant.

17. A detergent composition as in claim 16 wherein the nonionic surfactant comprises a mixture of alkoxylated alcohols of the formula R(R′O)xOH wherein R is hydrocarbyl having from 12 to 20 carbon atoms, R′O represents an alkoxy group and X ranges from 4 to 12.

## Patentansprüche

1. Photoaktivatorfarbstoff-Zubereitung umfassend Mikrokapseln einer festen Dispersion eines wasserlöslichen Photoaktivatorfarbstoffs in einem Einkapselungsmaterial, welches in Wasser schnell löslich ist, wobei die Mikrokapseln, auf das Gewicht der Kapseln bezogen,
a) 1 bis 60% des Photoaktivatorfarbstoffs.
b) 38 bis 97% des Einkapselungsmaterials und
c) 2 bis 12% Wasser umfassen.

2. Zubereitung nach Anspruch 1, worin das Einkapselungsmaterial in nichtionischen oberflächenaktiven Mitteln unlöslich ist.

3. Zubereitung nach Anspruch 1 oder 2 umfassend Mikrokapseln mit einer durchschnittlichen Teilchengröße im Bereich von 50 µm bis 450 µm.

4. Zubereitung nach Anspruch 1 oder 2, worin der Photoaktivatorfarbstoff ein Komplex eines sulfonierten Phthalocyanins mit mehrwertigen Metallionen ist.

5. Zubereitung nach Anspruch 4, worin der Photoaktivatorfarbstoff Zink-phthalocyaninsulfonat. Aluminium-phthalocyaninsulfonat oder eine Mischung davon ist.

6. Zubereitung nach den Ansprüchen 2 bis 5, worin das Einkapselungsmaterial aus hydrolisierter Gelatine und filmbildenden Kohlenhydraten einschließlich Dextrin und Gummi arabicum ausgewählt ist.

7. Zubereitung nach den Ansprüchen 1 bis 6, worin die Mikrokapseln 1 bis 40 Gew.-% des Photoaktivatorfarbstoffes umfassen.

8. Zubereitung nach den Ansprüchen 1 bis 7, welche zusätzlich Saccharose oder Glukosesirup enthält, wobei das Gewichtsverhältnis von Einkapselungsmaterial zu Saccharose- oder Glukosesirup mindestens 35:65, vorzugsweise 50:50 beträgt.

9. Verfahren zur Herstellung der Photoaktivator-Zubereitung nach Anspruch 1 oder 2, umfassend die Schritte:
(1) Auflosen des Photoaktivator-Farbstoffs in einem wäßrigen Medium.
(2) Vermischen der Photoaktivatorfarbstoff-Lösung mit einer wäßrigen Lösung des Einkapselungsmaterials.
(3) Umwandeln der in dieser Weise erhaltenen Mischung in Tröpfchen mit einer durchschnittlichen Teilchengröße von nicht mehr als 500 µm und
(4) Verringern des Feuchtigkeitsgehalts der Teilchen auf einen Wert zwischen 2 und 12 Gew.-% zur Bildung einer festen Lösung des Photoaktivator-Farbstoffs in dem Einkapselungsmaterial.

10. Verfahren nach Anspruch 9, worin die Umwandlung der Mischung in Tröpfchen und die Verringerung des Feuchtigkeitsgehalts der Tröpfchen durch Sprühtrocknen bewirkt wird.

11. Verfahren nach Anspruch 10, worin das Sprühtrocknen bei einer Temperatur unterhalb 100°C unter Einführen eines feinen Pulvers in die Sprühtrocknungszone bewirkt wird.

12. Verfahren nach Anspruch 9, worin das Sprühtrocknen bei einer Temperatur oberhalb 100°C bewirkt wird.

13. Verfahren nach den Ansprüchen 9 bis 12, worin Saccharose oder Glukose zu der Mischung des Photoaktivator-Farbstoffes und des Einkapselungsmaterials zugesetzt wird.

14. Verfahren nach den Ansprüchen 9 bis 13, worin ein Öl in der Mischung aus dem Photoaktivator-Farbstoff und dem Einkapselungsmaterial emulgiert wird.

15. Waschmittelzubereitung umfassend:
(a) ein oberflächenaktives Mittel,
(b) eine Photoaktivatorfarbstoff-Zubereitung nach einem der Ansprüche 1 bis 6, wobei der reine Photoaktivator-Farbstoff in einer Menge von 2 ppm bis 1000 ppm, bezogen auf die gesamte Zubereitung, vorhanden ist, und
(c) übliche Waschmittelbestandtelle als Rest.

16. Waschmittelzubereitung nach Anspruch 15, enthaltend 1 bis 12% eines nichtionischen oberflächenaktiven Mittels.

17. Waschmittelzubereitung nach Anspruch 16, worin das nichtionische oberflächenaktive Mittel eine Mischung aus alkoxylierten Alkoholen der Formel R(R'O)xOH, wenn R eine Kohlenwasserstoffgruppe mit 12 bis 20 Kohlenstoffatomen. R'O eine Alkoxygruppe und x 4 bis 12 bedeuten.

## Revendications

1. Composition de colorant photoactivateur comprenant des microcapsules d'une dispersion solide d'un colorant photoactivateur hydrosoluble dans une matière d'encapsulation qui est facilement soluble dans l'eau, lesdites microcapsules comprenant, en poids des capsules,
a) de 1% à 60% du colorant photoactivateur,
b) de 38% à 97% de la matière d'encapsulation, et
c) de 2% à 12% d'eau.

2. Composition selon le revendication 1, dans laquelle la matière d'encapsulation est insoluble dans les tensioactifs non ioniques.

3. Composition selon la revendication 1 ou 2 comprenant des microcapsules ayant une granulométrie moyenne de 50 µm à 450 µm.

4. Composition selon la revendication 1 ou 2, dans laquelle le colorant photoactivateur est un complexe d'ion métallique multivalent de phtalocyanine sulfonée.

5. Composition selon la revendication 4, dans laquelle le colorant photoactivateur est du phtalocyanine-sulfonate de zinc, du phtalocyanine-sulfonate d'aluminium, ou un mélange de ceux-ci.

6. Composition salon les revendications 2-5, dans laquelle le matière d'encapsulation est choisie parmi la gélatine hydrolysée et les hydrocarbures filmogènes, notamment la dextrine et la gomme arabique.

7. Composition selon les revendications 1-6, dans laquelle les microcapsules comprennent de 1 à 40% en poids de colorant photoactivateur.

8. Composition selon les revendications 1-7, qui contient, en outre, du saccharose ou du sirop de glucose, le rapport pondéral de la matière d'encapsulation au saccharose ou ou sirop de glucose étant d'au moins 35:65, de préférence de 50:50.

9. Procédé de préparation de la composition de photoactivateur selon la revendication 1 ou 2, comprenant les étapes Qui consistent à
(1) dissoudre le colorant photoactivateur dans un milieu aqueux,
(2) mélanger la solution de colorant photoactivateur avec une solution aqueuse de la matière d'encapsulation,
(3) transformer le mélange ainsi obtenu en gouttelettes ayant une granulométrie moyenne ne dépassant pas 500 µm et
(4) réduire la teneur en humidité desdites particules à une valeur comprise entre 2% et 12% en poids pour former une solution solide du colorant photoactivateur dans le matière d'encapsulation.

10. Procédé selon la revendication 9, dans lequel la transformation du mélange en gouttelettes et la réduction de la teneur en humidité desdites gouttelettes sont effectuées par séchage par atomisation.

11. Procédé selon la revendication 10, dans lequel le séchage par atomisation est réalisé à une température inférieure à 100°C, pendant qu'une poudre fine est introduire dans la zone de séchage par atomisation.

12. Procédé selon la revendication 9, dans lequel le séchage par atomisation est réalisé à une température supérieure à 100°C.

13. Procédé selon les revendications 9-12, dans lequel on ajoute du saccharose ou du glucose au mélange du colorant photoactivateur et de la matière d'encapsulation.

14. Procédé selon les revendications 9-13, dans lequel une huile est émulsionée dans le mélange du colorant photoactivateur et de la matière d'encapsulation.

15. Composition détergente, comprenant
a) un tensioactif
b) une composition de colorant photoactivateur selon l'une quelconque des revendications 1-6, le colorant photoactivateur pur étant présent à raison de 2 ppm à 1000 ppm de la composition totale,
c) le reste comprenant des ingrédients détergents classiques.

16. Composition détergente selon la revendication 15, qui comprend de 1% à 12% d'un tensioactif non ionique.

17. Composition détergente selon la revendication 16, dans laquelle le tensioactif non ionique comprend un mélange d'alcools alcoxylés de formule R(R'O)ₓOH, dans laquelle R est un groupe hydrocarboné comportant 12 à 20 atomes de carbone, R'O représente un groupe alcoxy et X s'échelonne de 4 à 12.
